(19) Europäisches Patentamt
European Patent Office
Office européen des brevets

(11) Numéro de publication : **0 400 718 B1**

(12) # FASCICULE DE BREVET EUROPEEN

(45) Date de publication du fascicule du brevet : **23.03.94 Bulletin 94/12**

(51) Int. Cl.$^5$ : **C08K 5/06,** C08L 27/06

(21) Numéro de dépôt : **90201287.1**

(22) Date de dépôt : **22.05.90**

(54) **Compositions rigides à base de polychlorure de vinyle comprenant un polyol aliphatique à titre d'abaisseur de viscosité et utilisation de ces compositions pour le façonnage d'articles rigides par moulage par injection.**

(30) Priorité : **02.06.89 BE 8900603**

(43) Date de publication de la demande : **05.12.90 Bulletin 90/49**

(45) Mention de la délivrance du brevet : **23.03.94 Bulletin 94/12**

(84) Etats contractants désignés : **AT BE CH DE DK ES FR GB GR IT LI LU NL SE**

(56) Documents cités :
**EP-A- 0 058 447**
**PATENT ABSTRACTS OF JAPAN vol. 6, no. 118 (C-111)(996) 02 juillet 1982, & JP-A-57 44665**

(73) Titulaire : **SOLVAY (Société Anonyme)**
**Rue du Prince Albert, 33**
**B-1050 Bruxelles (BE)**

(72) Inventeur : **Criquilion, Jean**
**Avenue Speeckaert, 77**
**B-1200 Bruxelles (BE)**

(74) Mandataire : **Marckx, Frieda et al**
**Solvay Département de la Propriété Industrielle 310, rue de Ransbeek**
**B-1120 Bruxelles (BE)**

EP 0 400 718 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne des compositions rigides à base de polychlorure de vinyle comprenant un polyol aliphatique à titre d'abaisseur de viscosité. Elle concerne également l'utilisation de ces compositions pour le façonnage d'articles rigides par moulage par injection.

Le polychlorure de vinyle est un polymère thermoplastique utilisable pour le façonnage d'articles rigides très divers par toutes les techniques classiques de transformation des matières thermoplastiques à l'état fondu, telles que le calandrage, le moulage ou encore l'extrusion. Le malaxage, l'extrusion, le calandrage et le moulage des compositions rigides à base de polychlorure de vinyle nécessite l'application de forces de cisaillement, en vue d'assurer l'homogénéité et l'écoulement de la masse fondue, qui sont d'autant plus importantes que la viscosité à l'état fondu est élevée. L'application de forces de cisaillement élevées génère par ailleurs de la chaleur de friction en des quantités susceptibles de provoquer la dégradation thermique du polychlorure de vinyle. Un moyen connu pour abaisser la viscosité à l'état fondu des compositions rigides à base de polychlorure de vinyle consiste à faire usage de polymères du chlorure de vinyle à poids moléculaires réduits. Néanmoins, dans ce cas l'abaissement de la viscosité à l'état fondu s'obtient au détriment des propriétés mécaniques des objets façonnés. Il est par ailleurs connu que les plastifiants abaissent la viscosité à l'état fondu des polymères thermoplastiques. Toutefois, lorsqu'on vise à fabriquer des articles façonnés rigides, il est exclu de recourir à l'emploi de plastifiants, car ceux-ci affectent précisément la rigidité des articles finis. Il est donc hautement souhaitable de disposer d'additifs abaisseurs de viscosités, c'est-à-dire de produits qui soient capables d'abaisser efficacement la viscosité à l'état fondu des compositions rigides à base de polychlorure de vinyle.

Dans la demande de brevet japonais JA-A-77/74650 du 19 décembre 1975 au nom de MATSUSHITA ELECTRIC WORKS LTD (résumée aux Chemical Abstracts, Volume 87, sous le numéro 118858 k), on décrit l'utilisation de mannitol à raison de 0,3 à 4 parties pour 100 parties en poids de polychlorure de vinyle à titre de "modificateur d'écoulement" du polychlorure de vinyle rigide. Vérification faite, il s'est avéré que l'abaissement de la viscosité au fondu que procure le mannitol dans cette gamme de concentrations est insuffisant pour réaliser des articles façonnés de dimensions importantes et d'épaisseurs faibles et que l'utilisation de mannitol à concentration plus élevée, dans l'espoir d'augmenter l'effet abaisseur de viscosité, ne peut être envisagée concrètement en raison d'un effet redhibitoire sur le plan de la stabilité thermique.

Dans la demande de brevet japonais JA-A-82/44665 du 4 juillet 1980 au nom de KOEI CHEMICAL CO LTD (résumée aux Chemical Abstracts, Volume 97, sous le numéro 24702 j), on décrit l'utilisation de di-triméthylolpropane comme stabilisant thermique secondaire des polymères du chlorure de vinyle à raison de 0,1 à 10 parties et, de préférence, 0,5 à 5 parties en poids pour 100 parties en poids de polymère du chlorure de vinyle. Dans les exemples de réalisation, on met en oeuvre 2 parties en poids au maximum de di-triméthylolpropane pour 100 parties de polychlorure de vinyle stabilisé à l'intervention de stéarates de calcium et de zinc. Le problème de l'abaissement de la viscosité au fondu du polychlorure de vinyle n'est pas abordé dans le document en cause. Par ailleurs, l'amélioration de la stabilité thermique du polychlorure de vinyle procède d'une problématique totalement différente de celle de l'abaissement de sa viscosité à l'état fondu.

La présente invention vise à procurer des compositions rigides à base de polychlorure de vinyle comprenant un polyol à titre d'abaisseur de viscosité qui ne présentent pas les inconvénients précités. A cet effet, l'invention procure des compositions rigides à base de polychlorure de vinyle contenant du di-triméthylolpropane à titre d'abaisseur de viscosité à raison de 6 à 9 parties en poids pour 100 parties en poids de polychlorure de vinyle. Il a été constaté que le di-triméthylolpropane, utilisé à raison de 6 à 9 pcr environ, constitue un abaisseur de viscosité très efficace du polychlorure de vinyle dont il n'affecte ni la stabilité thermique, ni la thermorésistance, c'est-à-dire la température de déformation à la chaleur (HDT) ou encore le point Vicat.

Le di-triméthylolpropane est un tétrol aliphatique solide dont le point de fusion se situe aux environs de 109°C et qui répond à la formule :

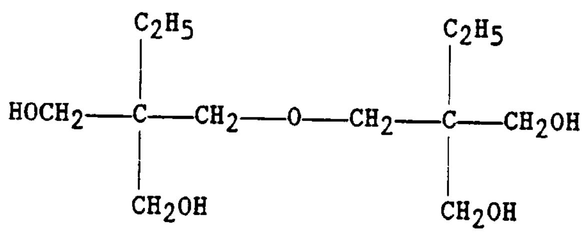

La quantité optimale de di-triméthylolpropane qu'il convient d'utiliser est évaluée avantageusement par voie expérimentale. Elle dépend, bien entendu, du résultat visé en ce qui concerne l'abaissement de la viscosité

à l'état fondu, mais également du poids moléculaire du polychlorure de vinyle utilisé et de la nature et de la concentration des ingrédients de mise en oeuvre présents dans les compositions rigides à base de polychlorure de vinyle, tels que des lubrifiants, des agents facilitant la mise en oeuvre ("processing aids"), des charges etc.

Par polychlorure de vinyle, on entend désigner aux fins de la présente invention, les polymères du chlorure de vinyle contenant au moins 50 % molaires, et de préférence, au moins 70 % molaires, d'unités monomériques dérivées du chlorure de vinyle. Les polymères du chlorure de vinyle qui conviennent à la réalisation des compositions selon l'invention comprennent donc aussi bien les homopolymères du chlorure de vinyle que ses copolymères contenant des unités monomériques dérivées d'un ou de plusieurs comonomères. Ces copolymères peuvent être des copolymères greffés sur un tronc quelconque. A titre d'exemples de comonomères du chlorure de vinyle, on peut citer les oléfines telles que l'éthylène, le propylène et le styrène, les esters tels que l'acétate de vinyle et les acrylates et les méthacrylates d'alkyles, les dérivés vinylidéniques tels que le chlorure et le fluorure de vinylidène. De préférence, les compositions suivant l'invention sont à base d'homopolymères du chlorure de vinyle.

Le mode de fabrication des polymères du chlorure de vinyle mis en oeuvre peut être quelconque. On peut donc utiliser indifféremment pour la fabrication de compositions selon l'invention des polymères du chlorure de vinyle obtenus par polymérisation en masse, en phase gazeuse, en solution ou encore en émulsion ou en suspension aqueuses.

Outre du di-triméthylolpropane, les compositions rigides selon l'invention comprennent tous les ingrédients usuellement utilisés à la mise en oeuvre du polychlorure de vinyle rigide, tels que des stabilisants thermiques, des lubrifiants, des agents facilitant la mise en oeuvre, des agents renforçant au choc, etc. Elles peuvent également contenir des charges, des pigments, etc. S'agissant de compositions rigides, elles sont en principe exemptes de plastifiant. Néanmoins elles peuvent en contenir des quantités mineures, inférieures à 5 % en poids. Tous ces ingrédients sont présents dans les concentrations habituelles. Des exemples de stabilisants thermiques, de lubrifiants, d'agents facilitant la mise en oeuvre ou améliorant la résistance au choc usuels du polychlorure de vinyle sont décrits, par exemple, dans l'ouvrage de H. A. Sarvetnick intitulé : "Polyvinyl chloride", Reinhold Plastics Application Series, 1969, pp. 98-99; pp. 124-127 et pp. 120-124 incorporé à titre de référence. Dans la mesure où les ingrédients liquides provoquent une diminution de la thermorésistance des compositions rigides à base de polychlorure de vinyle, on donne la préférence aux ingrédients (stabilisants thermiques, lubrifiants etc.) solides.

Des compositions particulièrement préférées selon la présente invention contiennent comme stabilisant thermique primaire un composé de plomb, tel qu'un sel organique ou inorganique de plomb. A titre d'exemples de pareils stabilisants thermiques primaires au plomb, on peut citer le phosphate et le phosphite dibasiques de plomb, le carbonate dibasique de plomb, le silicate basique de plomb, le chlorosilicate de plomb, les sulfates tribasique ou tétrabasique de plomb, le phtalate de plomb, ainsi que les stéarates basiques de plomb et le stéarate neutre de plomb, ces derniers ayant une action lubrifiante et étant parfois décrits comme étant des lubrifiants. On donne la préférence aux composés inorganiques de plomb.

Des compositions tout particulièrement préférées selon la présente invention contiennent, outre un composé inorganique de plomb comme stabilisant thermique primaire, un carboxylate neutre de plomb dérivé d'acides gras en $C_8$ à $C_{30}$, comme lubrifiant. Il a été constaté que, contrairement aux carboxylates basiques de plomb, tels que par exemple le stéarate dibasique de plomb, les carboxylates neutres de plomb agissent en synergie avec le di-triméthylolpropane en matière d'abaissement de la viscosité à l'état fondu des compositions rigides à base de polychlorure de vinyle, ainsi d'ailleurs qu'en matière de stabilité thermique dynamique. A titre d'exemples de pareils carboxylates neutres de plomb, on peut citer le caprylate, la caprate, le laurate, le myristate, le palmitate et le stéarate neutre de plomb. On donne la préférence aux carboxylates neutres de plomb dérivés d'acides gras en $C_{14}$ à $C_{20}$ et tout particulièrement au stéarate neutre de plomb. Dans le cas où la composition contient un carboxylate neutre de plomb, il est généralement superflu d'y inclure un autre lubrifiant. Le carboxylate neutre de plomb dérivé d'acide gras en $C_8$ à $C_{30}$ est habituellement présent à raison d'environ 1 à 3 parties pour 100 parties en poids de polychlorure de vinyle.

Les compositions selon l'invention peuvent être mises en oeuvre par toutes les techniques classiques de mise en oeuvre des polymères thermoplastiques à l'état fondu, telles que l'extrusion, le calandrage et le moulage par injection. Elles conviennent particulièrement pour le moulage par injection, technique de transformation très exigeante sur le plan de l'abaissement de la viscosité à l'état fondu de compositions rigides. L'invention concerne donc également l'utilisation des compositions rigides selon l'invention pour le façonnage d'articles rigides par moulage par injection. Pour cette utilisation, on donne la préférence aux compositions selon l'invention stabilisées thermiquement à l'intervention de composés de plomb et, plus particulièrement encore à celles contenant un composé inorganique de plomb comme stabilisant thermique et un carboxylate neutre de plomb comme lubrifiant. A titre d'exemples d'articles rigides façonnables par moulage par injection des compositions préférées selon l'invention, on peut mentionner les boitiers pour machines de bureautique et pour appareils de radio et de télévision, des caillebotis pour tours de refroidissement, des armoires électriques, des réservoirs de filtration, des composants de ventilateurs, etc.

Les exemples qui suivent sont destinés à illustrer l'invention.

Les exemples 1, 3, 5 et 6, selon l'invention concernent des compositions comprenant 8 parties en poids pour 100 parties de polychlorure de vinyle (pcr) de di-triméthylolpropane. Les exemples 2, 4, 7 et 8, de comparaison, concernent des compositions ne contenant pas de di-triméthylolpropane (exemples 2, 4, 7) ou en contenant moins de 6 pcr (exemple 8). Dans les exemples 1 et 2 , le polychlorure de vinyle utilisé est un homopolymère du chlorure de vinyle de nombre K (mesuré à 25°C dans la cyclohexanone) égal à 50 et obtenu par polymérisation en suspension aqueuse. Dans les exemples 3 à 8, le polychlorure de vinyle utilisé est un homopolymère du chlorure de vinyle de nombre K (mesuré à 25°C dans la cyclohexanone) égal à 58 et obtenu par polymérisation en suspension aqueuse.

Sur un mélangeur rapide, on a préparé des compositions par mélange à chaud des ingrédients suivants, les quantités étant exprimées en parties en poids:

| | |
|---|---|
| Polychlorure de vinyle | 100 |
| Agent (acrylique) renforçant au choc | 5 |
| Agents (acryliques) de mise en oeuvre | 3 |
| Sulfate tribasique de plomb | 5 |
| Carbonate de calcium précipité | 5 |
| Oxyde de titane | 2 |
| Di-triméthylolpropane | voir tableau |
| Stéarate neutre de plomb | " |
| Stéarate dibasique de plomb | " |

Après avoir prélevé une partie des mélanges obtenus en vue d'évaluer leur stabilité thermique, on a prégélifié les mélanges à 170°C environ avant de les granuler.

La viscosité à l'état fondu des compositions rigides selon les exemples 1 à 8 a été évaluée par la mesure de la longueur de spirales moulées par injection.

Les granules ont été injectés sur une presse à vis (équipée pour l'injection du polychlorure de vinyle rigide) sous une pression de 1250 bars pendant 2 secondes dans un moule à spirale de 15 mm de large et de 2 mm d'épaisseur. La course de dosage a été réglée de manière à obtenir un matelas de matière de 2 mm d'épaisseur en fin d'injection. Les températures affichées sur le fourreau ont été réglées de manière à obtenir une température matière à la sortie de 200°C. Les spirales moulées ont été refroidies pendant 20 secondes, après quoi on a mesuré leur longueur.

Dans le tableau en annexe figurent, outre la teneur des compositions en di-triméthylolpropane, en stéarate neutre de plomb et en stéarate dibasique de plomb, les résultats de l'évaluation de la stabilité thermique dynamique des compositions caractérisée par le Yellowness Index (YI) atteint par des crêpes malaxés sur malaxeur à cylindres pendant 20 minutes à 200°C, ainsi que la longueur, exprimée en centimètres, des spirales moulées.

TABLEAU

| N° des exemples | Compositions | | | Evaluation | |
|---|---|---|---|---|---|
| | Di-triméthylol-propane, pcr | Stéarate neutre de plomb, pcr | Stéarate dibasique de plomb, pcr | Longueur des spirales, cm | YI |
| 1 | 8 | 2 | - | 63 | 26.3 |
| 2 (R) | - | 2 | - | 43 | 25.0 |
| 3 | 8 | 2 | - | 43 | 17.9 |
| 4 (R) | - | 2 | - | 26 | 31.0 |
| 5 | 8 | - | - | 39 | 32.7 |
| 6 | 8 | - | 1,5 | 38 | 26.6 |
| 7 (R) | - | - | 1,5 | 23 | 61.4 |
| 8 (R) | 4 | - | 1,5 | 29,5 | 42.2 |

## Revendications

1. Compositions rigides à base de polychlorure de vinyle comprenant un polyol aliphatique à titre d'abaisseur de viscosité, caractérisées en ce qu'elles contiennent du di-triméthylolpropane à titre d'abaisseur de viscosité à raison de 6 à 9 parties en poids pour 100 parties en poids de polychlorure de vinyle.

2. Compositions rigides à base de polychlorure de vinyle suivant la revendication 1, caractérisées en ce qu'elles contiennent comme stabilisant thermique primaire un composé de plomb choisi parmi les sels organiques et inorganiques de plomb.

3. Compositions rigides à base de polychlorure de vinyle suivant la revendication 2, caractérisées en ce que le composé de plomb est choisi parmi les sels inorganiques de plomb et en ce qu'elles contiennent un carboxylate neutre de plomb contenant de 8 à 30 atomes de carbone comme lubrifiant.

4. Compositions rigides à base de polychlorure de vinyle suivant la revendication 3, caractérisées en ce que le carboxylate neutre de plomb contient de 14 à 20 atomes de carbone.

5. Compositions rigides à base de polychlorure de vinyle suivant la revendication 4, caractérisées en ce que le carboxylate neutre de plomb est le stéarate neutre de plomb.

6. Compositions suivant l'une quelconque des revendications 1 à 5, caractérisées en ce que le polychlorure de vinyle est un homopolymère du chlorure de vinyle.

7. Utilisation des compositions suivant l'une quelconque des revendications 1 à 6 pour le façonnage d'articles rigides.

8. Utilisation des compositions suivant l'une quelconque des revendications 3 à 6 pour le façonnage d'articles rigides par moulage par injection.

## Claims

1. Rigid compositions based on polyvinyl chloride comprising an aliphatic polyol as a viscosity reducer, characterized in that they contain di-trimethylolpropane as a viscosity reducer in a proportion of 6 to 9 parts by weight per 100 parts by weight of polyvinyl chloride.

2. Rigid compositions based on polyvinyl chloride according to Claim 1, characterized in that they contain, as primary heat stabilizer, a lead compound chosen from organic and inorganic lead salts.

3. Rigid compositions based on polyvinyl chloride according to Claim 2, characterized in that the lead compound is chosen from inorganic lead salts and in that they contain a neutral lead carboxylate containing from 8 to 30 carbon atoms as lubricant.

4. Rigid compositions based on polyvinyl chloride according to Claim 3, characterized in that the neutral lead carboxylate contains from 14 to 20 carbon atoms.

5. Rigid compositions based on polyvinyl chloride according to Claim 4, characterized in that the neutral lead carboxylate is neutral lead stearate.

6. Compositions according to any one of Claims 1 to 5, characterized in that the polyvinyl chloride is a vinyl chloride homopolymer.

7. Use of the compositions according to any one of Claims 1 to 6 for the manufacture of rigid articles.

8. Use of the compositions according to any one of Claims 3 to 6 for the manufacture of rigid articles by injection moulding.

## Patentansprüche

1. Harte Zusammensetzungen auf der Basis von Polyvinylchlorid, welche ein aliphatisches Polyol als Viskositätserniedriger enthalten, dadurch gekennzeichnet, daß sie Di-trimethylolpropan als Viskositätserniedriger in einer Menge von 6 bis 9 Gewichtsteilen pro 100 Gewichtsteile Polyvinylchlorid enthalten.

2. Harte Zusammensetzungen auf der Basis von Polyvinylchlorid nach Anspruch 1, dadurch gekennzeichnet, daß sie als primäres, thermisches Stabilisierungsmittel eine Bleiverbindung, ausgewählt unter den

organischen und anorganischen Bleisalzen, enthalten.

3. Harte Zusammensetzungen auf der Basis von Polyvinylchlorid nach Anspruch 2, dadurch gekennzeichnet, daß die Bleiverbindung ausgewählt ist unter den anorganischen Bleisalzen, und daß sie ein neutrales Bleicarboxylat mit 8 bis 30 Kohlenstoffatomen als Schmiermittel enthalten.

4. Harte Zusammensetzungen auf der Basis von Polyvinylchlorid nach Anspruch 3, dadurch gekennzeichnet, daß das neutrale Bleicarboxylat 14 bis 20 Kohlenstoffatome enthält.

5. Harte Zusammensetzungen auf der Basis von Polyvinylchlorid nach Anspruch 4, dadurch gekennzeichnet, daß das neutrale Bleicarboxylat neutrales Bleistearat ist.

6. Zusammensetzungen nach einem der Ansprüche 1 bis 5, dadurch gekennzeichnet, daß das Polyvinylchlorid ein Vinylchloridhomopolymer ist.

7. Verwendung der Zusammensetzungen nach einem der Ansprüche 1 bis 6 zur Herstellung steifer Gegenstände.

8. Verwendung der Zusammensetzungen nach einem der Ansprüche 3 bis 6 zur Herstellung steifer Gegenstände durch Spritzgiessen.